# EUROPEAN PATENT APPLICATION

(11) **EP 2 373 097 A1**
(43) Date of publication of application: **05.10.2011**
(21) Application number: 09840003.9
(22) Date of filing: 13.02.2009
(51) Int. Cl.: H04W 52/02

(54) **COMMUNICATION APPARATUS, COMMUNICATION SYSTEM AND SLAVE STATION APPARATUS**

(71) Applicant: Mitsubishi Electric Corporation, Tokyo 100-8310 (JP)
(72) Inventor: KOZAKI, Seiji, Tokyo 100-8310 (JP); TSUJI, Akihiro, Tokyo 100-8310 (JP); NAKURA, Kenichi, Tokyo 100-8310 (JP)
(74) Representative: Pfenning, Meinig & Partner GbR
(86) International application number: PCT/JP2009/052423
(87) International publication number: WO 2010/092683

(57) **Abstract**

A communication apparatus includes a main-data processing unit that performs predetermined data processing on input data, and operates by switching two states of a sleep state as a state where an operation of the main-data processing unit is stopped and a normal state as a state where the main data processing unit is operating. The communication apparatus includes a filtering unit that extracts communication state information for indicating a communication state from the input data, and a signal processing unit of a sub-data processing unit that shifts the main-data processing unit to a sleep state or a normal state based on the communication state information.

## Description

### TECHNICAL FIELD

The present invention relates to a communication apparatus that conducts energy saving in a communication system that performs data communications, and to a communication system.

### BACKGROUND ART

According to a conventional power-consumption reducing method of a communication apparatus, for example, there is used a method for performing a sampling process on the number of generation and generation interval of data packets that are transmitted and received by the communication apparatus; and stopping an operation of the communication apparatus during a period when there is no transmitted or received data packet, as described in Patent Document 1 mentioned below.

Patent Document 1: Japanese Patent Application Laid-open No. 2005-33586

### DISCLOSURE OF INVENTION

### PROBLEM TO BE SOLVED BY THE INVENTION

However, according to the conventional power-consumption reducing method, shifting between a sleep state and a normal state is determined by monitoring a generation state of transmitted or received packets. Therefore, there is a problem that when a packet is received in a sleep state, the packet will be lost up to a timing when it is shifted to a normal state. Furthermore, there is also a problem that, because many packets are monitored until a sleep state is shifted to a normal state, it takes time to shift to a normal state.

The present invention has been achieved in view of the above problems, and an object of the present invention is to provide a communication apparatus and a communication system that can prevent loss of a packet that is received in a sleep state and that can shift from a sleep state to a normal state in a short time.

### MEANS FOR SOLVING PROBLEM

In order to solve the aforementioned problems and attain the aforementioned object, communication apparatus according to one aspect of the present invention is constructed in such manner as to have a data processing unit that performs predetermined data processing on input data, and operates by switching two states of a sleep state as a state where an operation of the data processing unit is stopped and a normal state as a state where the data processing unit is operating; the communication apparatus comprises: a filtering unit that extracts communication state information for indicating a communication state from the input data; and a signal processing unit that shifts the data processing unit to a sleep state or a normal state based on the communication state information.

### EFFECT OF THE INVENTION

The communication apparatus according to the present invention detects a control signal of a high-order layer, determines a communication state based on a detected control signal, and controls stop and start of an operation of a data processing unit based on the determined communication state. Therefore, the communication apparatus can prevent loss of a packet that is received in a sleep state and can shift from a sleep state to a normal state in a short time.

### BRIEF DESCRIPTION OF DRAWINGS

[FIG. 1] FIG. 1 is a functional configuration example of a communication apparatus according to a first embodiment of the present invention.
[FIG. 2] FIG. 2 is a simplified sequence diagram of an example of a procedure at a communication starting time of general communications.
[FIG. 3] FIG. 3 is a sequence diagram of a case where communications are established after retransmission.
[FIG. 4] FIG. 4 is a sequence diagram of a case where communications of user data cannot be established after performing retry twice.
[FIG. 5] FIG. 5 is a configuration example of a communication system according to a third embodiment.
[FIG. 6] FIG. 6 is a functional configuration example of slave stations according to the third embodiment.
[FIG. 7] FIG. 7 is a functional configuration example of a master station according to the third embodiment.
[FIG. 8] FIG. 8 is a functional configuration example of slave stations according to a fourth embodiment.

### EXPLANATIONS OF LETTERS OR NUMERALS

1 Filtering unit
1a-1, 11-1 First filtering unit
1a-2, 11-2 Second filtering unit
2, 2a Main-data processing unit
3, 3a Sub-data processing unit
4, 15 Multiplexing unit
4a-1 First multiplexing unit
4a-2 Second multiplexing unit
5 Master station
6 Branching device
7-1 to 7-3 Slave station
8, 14 Control-signal generating unit
12-1, 23a-1 First high-speed processing unit
12-2, 23a-2 Second high-speed processing unit
13, 31, 31a Signal processing unit
21 CPU
22 Large capacity memory
23 High-speed processing unit
32 Storage unit
32a-1 First storage unit
32a-2 Second storage unit

### BEST MODE(S) FOR CARRYING OUT THE INVENTION

Exemplary embodiments of a communication apparatus and a communication system according to the present invention will be explained below in detail with reference to the accompanying drawings. The present invention is not limited to the embodiments.

First embodiment.

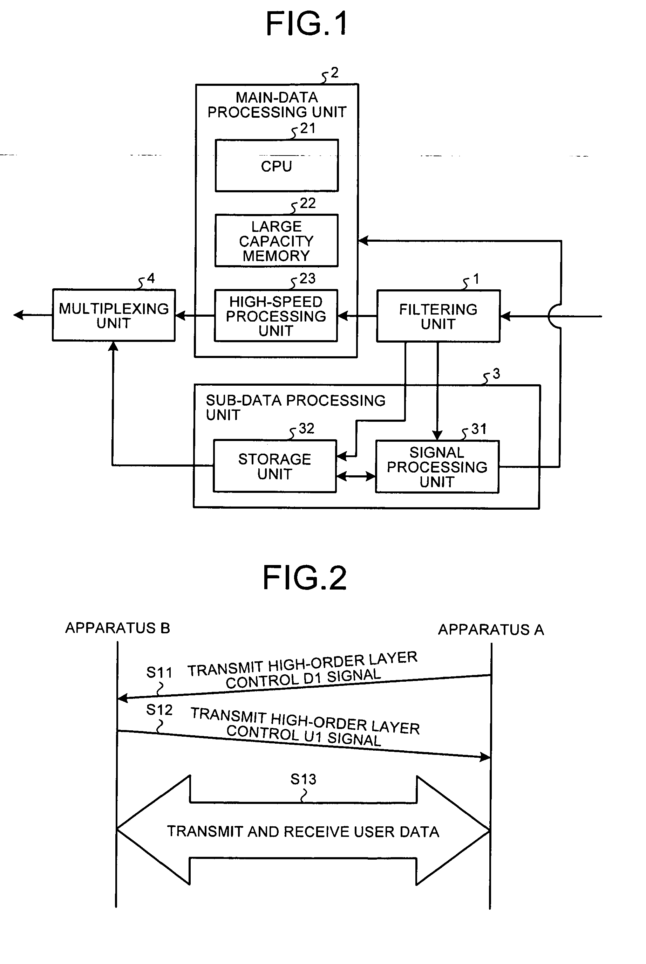

FIG. 1 is a functional configuration example of a communication apparatus according to a first embodiment of the present invention. As shown in FIG. 1, the communication apparatus according to the present embodiment is configured by a filtering unit 1 that detects specific data from input data; a main-data processing unit 2; a sub-data processing unit 3 that performs processes necessary for specific communications; and a multiplexing unit 4 that multiplexes or selects data output from the main-data processing unit 2 and the sub-data processing unit 3, respectively.

The main-data processing unit 2 is configured by a CPU (Central Processing Unit) 21, a large capacity memory 22, and a high-speed processing unit 23 that processes transmission/reception data. The sub-data processing unit 3 is configured by a signal processing unit 31 that processes a detection signal output from the filtering unit 1; and a storage unit 32 that stores specific data such as data that the signal processing unit 31 holds for performing processing and data that the filtering unit 1 holds for processing.

Generally, when user data is transmitted and received between communication apparatuses, control data necessary for a protocol process in a high-order layer is first transmitted and received to confirm a communication path and a format of the user data, and actual user data is transmitted and received, after the confirmation is completed. FIG. 2 is a simplified sequence diagram of an example of a procedure at a communication starting time of general communications. First, an apparatus A as a communication apparatus transmits to an apparatus B as a communication party, a high-order layer control D1 signal as a signal (a control signal of a high-order layer) that includes control data necessary for a protocol process in a high-order layer (Step S11). The apparatus B transmits to the apparatus B a high-order layer control U1 signal as a response (Step S12), and the actual user data is transmitted and received, and then communications are started (Step S13).

A control signal of a high-order layer is, in many cases, transmitted and received at starting and ending times of communications, and is periodically transmitted and received when communications are continued; and has a smaller data amount than that of user data. Therefore, the communication state can be easily recognized by monitoring this control signal.

Referring back to FIG. 1, operations of the present embodiment are explained. The filtering unit 1 detects a control signal of a high-order layer from input data, and outputs the detected signal to the signal processing unit 31. The signal processing unit 31 determines which one of start, end, and continuation is the communication state, based on the control signal detected by the filtering unit 1. It is assumed that the communication state can be recognized by referring to predetermined information of the control signal of the high-order layer. Further, the signal processing unit 31 performs a stop control (an instruction of stop or start) of an operation of the main-data processing unit 2 based on the determination result. Consequently, the operation of the main-data processing unit 2 can be controlled according to an actual communication state. Specifically, for example, when a determination result is start of communications, the operation of the main-data processing unit 2 is started, and when the result is end of communications, the operation of the main-data processing unit 2 is ended. In the following explanations, a state where the main-data processing unit 2 is operating is called "normal state", and a state where the main-data processing unit 2 is stopped is called "sleep state".

In a normal state, the filtering unit 1 outputs input data to the main-data processing unit 2, and the main-data processing unit 2 performs a predetermined process on the input data. The multiplexing unit 4 performs a multiplexing process and the like on data that is processed by the main-data processing unit 2, and outputs processed data to outside. In a sleep state, because the main-data processing unit 2 is stopped, when user data is input to the main-data processing unit 2, the user data is discarded without being processed. However, in the present embodiment, because a state is shifted to a normal state by determining start of communications before transmission and reception of the user data is started as described above; discarding of the user data does not occur, and thus the communications are started quickly.

In the example of FIG. 1, the signal processing unit 31 stores predetermined specific data in the storage unit 32 and outputs this specific data from the storage unit 32 to the multiplexing unit 4 when necessary, and the multiplexing unit 4 can transmit the data by multiplexing with the main-data processing unit 2. However, the storage unit 32 does not need to be provided when transmission of the specific data is not necessary.

In the present embodiment, while the communication state is determined by monitoring information of a control signal of a high-order layer, the communication state can be determined based on a counting result by counting the number of arrivals of a control signal of a high-order layer per unit time.

In the present embodiment, although only a sleep state (operation stop) has been considered as a state of reducing power consumption, when a state of reducing power based on a reduced communication rate is defined as an energy-saving state, for example; the signal processing unit 31 can be configured to shift to the energy-saving state based on a communication rate by accepting the communication rate as a communication state.

As described above, in the present embodiment, the filtering unit 1 detects a control signal of a high-order layer; and the signal processing unit 31 determines the communication state based on the detected control signal, and controls stop and start of the operation of the main-data processing unit 2 based on the communication state. Therefore, even when communications are started in a sleep state, the state can be quickly shifted to a normal state without discarding user data.

Second embodiment.
A communication apparatus according to a second embodiment of the present invention is explained next. The configuration of the communication apparatus according to the present embodiment is identical to that of the first embodiment. Although a control of stop and start of the main-data processing unit 2 is performed based on a control signal of a high-order layer in the first embodiment, in the present embodiment, the filtering unit 1 further stores a detected control signal of a high-order layer in the storage unit 32. The signal processing unit 31 performs a transferring process on the control signal of a high-order layer that is stored in the storage unit 32. Specifically, the signal processing unit 31 corrects a necessary part of the control signal of a high-order layer that is stored in the storage unit 32, and outputs the corrected control signal of a high-order layer to the multiplexing unit 4 via the storage unit 32.

Here the transferring process is a process of returning a received control signal of a high-order layer by correcting a content of this signal when necessary. For example, the transferring process corresponds to a process of returning a response signal like the high-order layer control U1 signal in the example shown in FIG. 2, and generally this process is performed by the main-data processing unit 2. When the main-data processing unit 2 performs the transferring process, the transferring process cannot be performed during a sleep period. On the other hand, in the present embodiment, during a period in which the main-data processing unit 2 shifts from a sleep state to a normal state; the main-data processing unit 2 can transfer a control signal of a high-order layer to other apparatuses. Operations of the second embodiment other than the above ones are identical to those of the first embodiment.

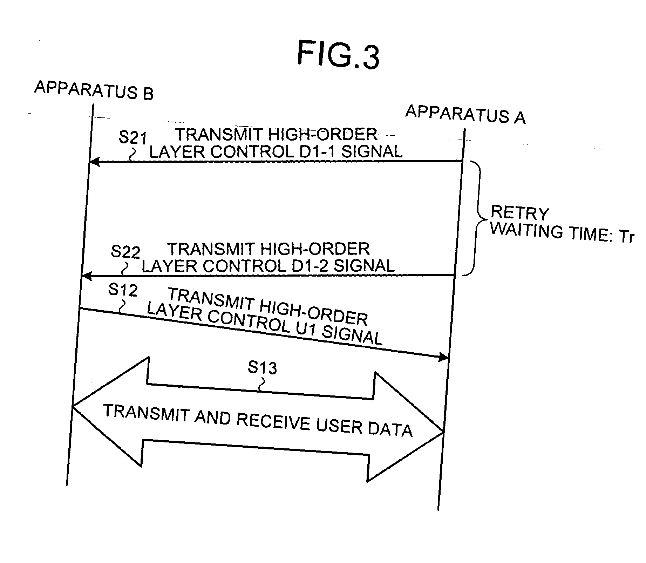

Then, an example that an effect of the present embodiment is exhibited, is explained next. FIG. 3 is a sequence diagram of a case where communications are established after retransmission. In an example of FIG. 3, the apparatus A transmits a high-order layer control D1-1 signal (Step S21), and there is no returning even after a predetermined retry waiting time Tr to perform retry, passes. Therefore, the apparatus A transmits a high-order layer control D1-2 signal as retransmission (retry) (Step S22). After receiving the high-order layer control D1-2 signal, the apparatus B transmits the high-order layer control U1 signal in a similar manner to that in the first embodiment (Step S12), and transmission and reception of user data is started (Step S13).

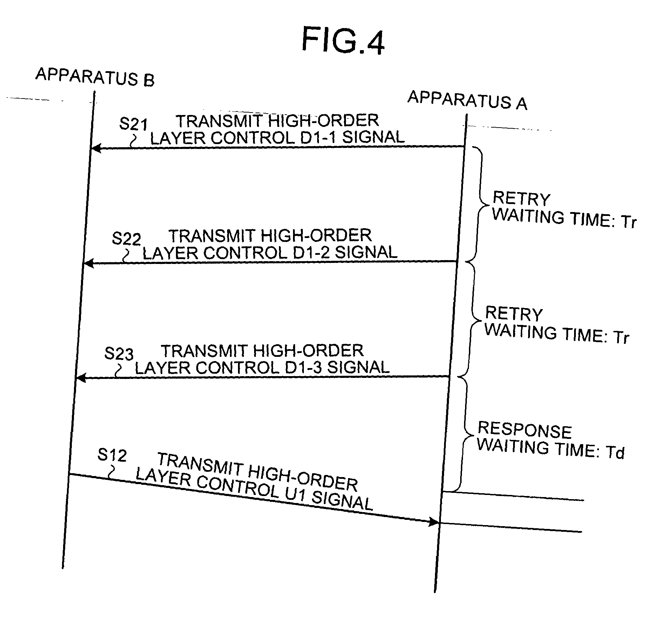

FIG. 4 is a sequence diagram of a case where communications of user data cannot be established because a predetermined or longer response waiting time passes after performing retry twice. In an example of FIG. 4, a process up to Step S22 is performed in a similar manner to that of FIG. 3, and thereafter there is no returning even after a lapse of a further retry waiting time. Therefore the apparatus A transmits a high-order layer control D1-3 signal as retry at a second time (Step S23). In this example, retry is performed up to a second time, and after performing the retry twice, when there is no response even after waiting for returning during a predetermined response waiting time Td, a communication establishing process is ended. Therefore, as shown in FIG. 4, after a lapse of the response waiting time Td, even when the apparatus B transmits the high-order layer control U1 signal as returning after Step S23 (Step S12), communications cannot be established when the apparatus A receives this signal after a lapse of the response waiting time Td.

As described above, because there are generally specifications of the number of times of performing retry and a response-waiting time in transmission and reception of a control signal of a high-order layer, when the main-data processing unit 2 returns a control signal like in a conventional manner, there is a problem that communications cannot be established when shifting from a sleep state to a normal state takes time. On the other hand, in the present embodiment, this problem does not occur because the signal processing unit 31 performs returning.

As described above, in the present embodiment, a control signal of a high-order layer is stored in the storage unit 32; and the signal processing unit 31 performs a returning process of the control signal based on the control signal of a high-order layer that is stored in the storage unit 32. Therefore, a response to the control signal of a high-order layer is made by the operation of the signal processing unit regardless of the state of the main-data processing unit. Consequently, communications can be established; even when shifting from a sleep state to a normal state, takes time.

Third embodiment.

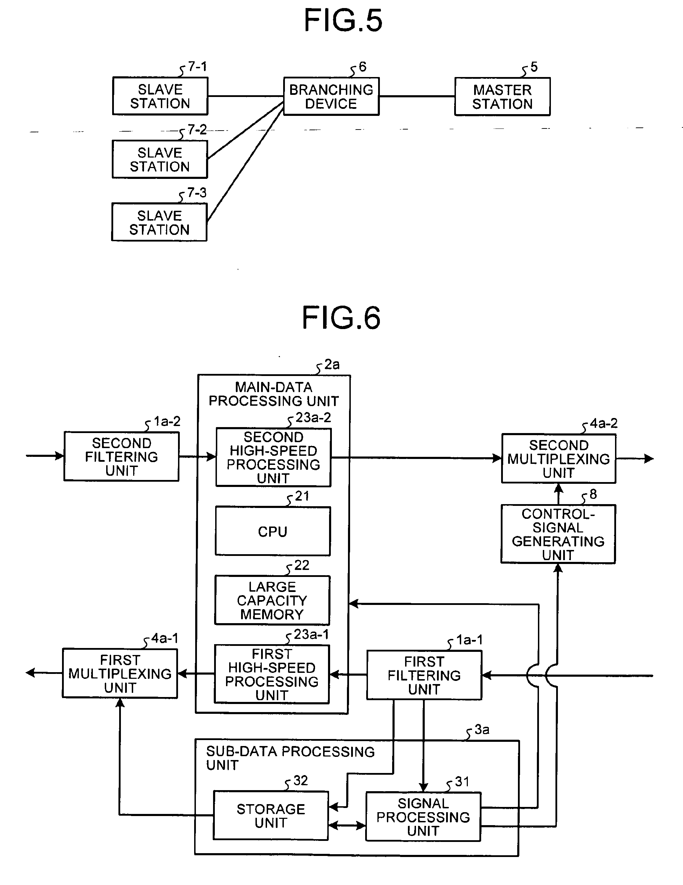

FIG. 5 is a configuration example of a communication system according to a third embodiment of the present invention. The communication system according to the present embodiment is configured by a master station 5, a branching device 6, and slave stations 7-1 to 7-3. The master station 5 performs data communications in a mode of accommodating the slave stations 7-1 to 7-3. A PON (Passive Optical Network) corresponds to this kind of communication system as a communication system that uses an optical fiber, for example. In the present embodiment, the slave stations 7-1 to 7-3 and the master station 5 are assumed to function as the communication apparatus according to the present invention.

In the following explanations, a direction from the master station 5 to the slave stations 7-1 to 7-3 is called "downstream", and a direction from the slave stations 7-1 to 7-3 to the master station 5 is called "upstream". It is assumed that data in an upstream direction is input to the slave stations 7-1 to 7-3 from a user apparatus or the like that is connected to each of the slave stations 7-1 to 7-3, and is transmitted to the master station 5; and that data in a downstream direction is output from the master station 5 to a user apparatus or the like via the slave stations 7-1 to 7-3.

FIG. 6 is a functional configuration example of the slave stations 7-1 to 7-3. As shown in FIG. 6, the slave stations 7-1 to 7-3 according to the present embodiment are configured by a first filtering unit 1a-1, a second filtering unit 1a-2, a main-data processing unit 2a, a sub-data processing unit 3a, a first multiplexing unit 4a-1, a second multiplexing unit 4a-2, and a control-signal generating unit 8. The main-data processing unit 2a includes the CPU 21 and the large capacity memory 22 in a similar manner to that of the main-data processing unit 2 according to the first embodiment, and also includes a first high-speed processing unit 23a-1 and a second high-speed processing unit 23a-2 instead of the high-speed processing unit 23. The sub-data processing unit 3a is configured by the signal processing unit 31 and the storage unit 32, and this is identical to the sub-data processing unit 3 according to the first embodiment. Constituent elements of the third embodiment having identical functions to those of the first embodiment, are denoted by like or same reference numerals, and explanations thereof will be omitted. The slave stations 7-1 to 7-3 are provided with a data processing system, a filtering unit, and a multiplexing unit for each of the upstream and downstream directions, and are provided with the control-signal generating unit 8 in the upstream direction, unlike in the communication apparatus according to the first embodiment shown in FIG. 1.

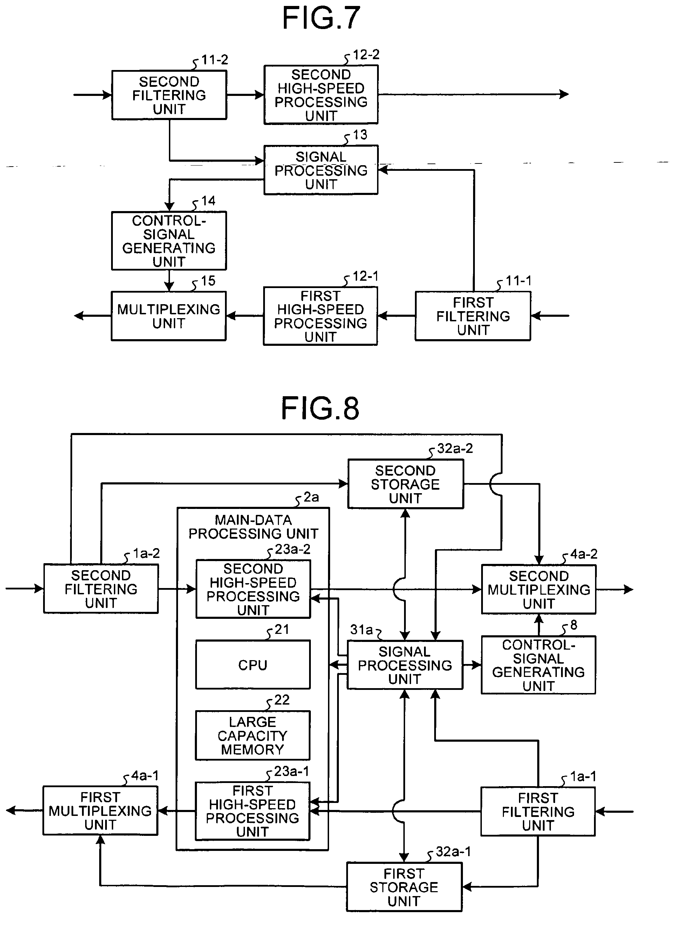

FIG. 7 is a functional configuration example of the master station 5. As shown in FIG. 7, the master station 5 is configured by a first filtering unit 11-1, a second filtering unit 11-2, a first high-speed processing unit 12-1, a second high-speed processing unit 12-2, a signal processing unit 13, a control-signal generating unit 14, and a multiplexing unit 15. The master station 5 is provided with a data processing system and a filtering unit for each of the upstream and downstream directions in a similar manner to that of the slave stations 7-1 to 7-3, and is also provided with the control-signal generating unit 14 in the downstream direction.

An operation of the master station 5 is explained first. The first filtering unit 11-1 and the second filtering unit 11-2 detect a control signal of a high-order layer from downstream input data and upstream input data, respectively, and notify a detected signal to the signal processing unit 13, in a similar manner to that of the filtering unit 1 according to the first embodiment. The signal processing unit 13 determines the communication state of each of slave stations based on a detected control signal of a high-order layer; and transmits to the control-signal generating unit 14 information for instructing shifting to a sleep state or a normal state to each of the slave station based on the communication state, in a similar manner to that in the first embodiment. The control-signal generating unit 14 transmits this information to the multiplexing unit 15 by including this information in the control signal of a high-order layer.
It should be noted that the control signal of a high-order layer is assumed to include information for identifying which one of the slave stations 7-1 to 7-3, the control signal of a high-order layer has passed through.

Meanwhile, the first filtering unit 11-1 outputs downstream input data to the first high-speed processing unit 12-1. The high-speed processing unit 12-1 performs a predetermined process, and thereafter outputs processed data to the multiplexing unit 15 as downstream data. The multiplexing unit 15 multiplexes the downstream data that is output from the high-speed processing unit 12-1 with a control signal that is output from the control-signal generating unit 14, and outputs a multiplexed data.

The second filtering unit 11-2 outputs upstream input data to the second high-speed processing unit 12-2, and the second high-speed processing unit 12-2 performs a predetermined process, and outputs processed data.

Operations of the slave stations 7-1 to 7-3 are explained next. In the slave stations 7-1 to 7-3, the first filtering unit 1a-1 extracts a control signal of a high-order layer from input downstream data (multiplexed downstream data transmitted from the master station 5); and outputs the extracted control signal of a high-order layer to the signal processing unit 31. The signal processing unit 31 instructs stop or start of an operation of the main-data processing unit 2a based on; information of a shifting instruction of a sleep state and a normal state from the master station 5, included in the control signal of a high-order layer. The signal processing unit 31 also instructs the control-signal generating unit 8 to generate a control signal of a high-order layer to the master station 5, based on the control signal of a high-order layer. The control-signal generating unit 8 generates the control signal of a high-order layer to the master station 5 based on the instruction, and outputs the generated control signal to the second multiplexing unit 4a-2. In this case, the generated control signal of a high-order layer is assumed to include information for indicating a state (a sleep state or a normal state) of the main-data processing unit 2a of the signal processing unit 31 itself.

The first filtering unit 1a-1 outputs downstream input data to the first high-speed processing unit 23a-1, and the first high-speed processing unit 23a-1 performs a predetermined process, and thereafter outputs processed downstream data to the first multiplexing unit 4a-1. The second filtering unit 1a-2 outputs upstream input data to the second high-speed processing unit 23a-2, and the second high-speed processing unit 23a-2 performs a predetermined process, and thereafter outputs processed upstream data to the second multiplexing unit 4a-2. The second multiplexing unit 4a-2 multiplexes a control signal of a high-order layer that is output from the control-signal generating unit 8, with upstream data that is output from the second high-speed processing unit 23a-2, and outputs multiplexed data.

In a similar manner to that in the second embodiment, the first filtering unit 1a-1 stores a control signal of a high-order layer in the storage unit 32, and the signal processing unit 31 performs a transferring process of the control signal of a high-order layer that is stored in the storage unit 32. Specifically, the signal processing unit 31 corrects a necessary part of the control signal of a high-order layer that is stored in the storage unit 32, and outputs the corrected control signal of a high-order layer to the first multiplexing unit 4a-1 via the storage unit 32. The first multiplexing unit 4a-1 multiplexes downstream input data output from the first high-speed processing unit 23a-1 with a control signal of a high-order layer, and outputs multiplexed data.

As described above, in the present embodiment, the master station 5 determines the communication state of the slave stations 7-1 to 7-3 based on a control signal of a high-order layer; and transmits information for instructing shifting to a sleep state or a normal state to each slave station based on a determination result, by including this information in a control signal of a high-order layer. The slave stations 7-1 to 7-3 instruct the main-data processing unit 2a to stop or restart an operation based on the information included in the control signal of a high-order layer. Therefore, a stop control of the main-data processing unit 2a of the slave stations 7-1 to 7-3 can be performed without discarding user data, in a similar manner to that in the first and second embodiments.

Further, in the present embodiment, because the master station 5 intensively determines the communication state of the slave stations 7-1 to 7-3, the slave stations 7-1 to 7-3 do not need to perform a determining process of the communication state, and can be achieved by a small processing capacity or in a small circuit scale. Further, because the slave stations 7-1 to 7-3 transmit a control signal of a high-order layer to an upstream direction; the master station 5 can recognize a state (a sleep state or a normal state) of the slave stations 7-1 to 7-3. Therefore, the master station 5 can confirm a control state of a shifting instruction performed by the master station 5 itself (whether the state is as instructed). Further, because the control-signal generating unit 8 generates a control signal of a high-order layer, link management of the master station 5 and the slave stations 7-1 to 7-3, can be performed in a sleep state.

In a system that does not require confirmation of the control state described above, lower power consumption can be achieved by stopping operations of both the main-data processing unit 2a and the control-signal generating unit 8, when the slave stations 7-1 to 7-3 receive a shifting instruction to a sleep state.

Fourth embodiment.
FIG. 7 is a functional configuration example of slave stations according to the third embodiment of the present invention. The slave stations according to the present embodiment are identical to the slave stations 7-1 to 7-3 according to the third embodiment; except that the slave stations include a signal processing unit 31a, a first storage unit 32a-1, and a second storage unit 32a-2 instead of the sub-data processing unit 3a of the slave stations 7-1 to 7-3 according to the third embodiment. The configuration of a communication system and the configuration of a master station according to the present embodiment are identical to those according to the third embodiment. However, in the present embodiment, because the slave stations perform a determining process of the communication state, the master station does not need to perform a determining process of the communication state of the slave stations. Constituent elements of the fourth embodiment having identical functions to those of the first embodiment are denoted by like or same reference numerals, and explanations thereof will be omitted.

In the present embodiment, the slave stations include a filtering unit and a data processing unit in each of the upstream and the downstream in a similar manner to that in the third embodiment. In the present embodiment, unlike in the third embodiment, the first filtering unit 1a-1 and the second filtering unit 1a-2 detect a control signal of a high-order layer from downstream input data and upstream input data, respectively, and output a detected control signal of a high-order layer to the signal processing unit 31a.

The signal processing unit 31a determines the communication state in a similar manner to that of the signal processing unit 31 according to the first embodiment, based on a control signal of a high-order layer that is output from the first filtering unit 1a-1 and the second filtering unit 1a-2, respectively. The signal processing unit 31a individually controls stop and start of operations of the first high-speed processing unit 23a-1 and the second high-speed processing unit 23a-2 based on the determination result. The signal processing unit 31a may be arranged to control stop and start of the entirety of the main-data processing unit 2a instead of controlling stop and start of operations of the first high-speed processing unit 23a-1 and the second high-speed processing unit 23a-2. Furthermore, according to need, the signal processing unit 31a can be arranged to transmit notification information of a state (a sleep state or a normal state) of the signal processing unit 31a itself to the master station 5 by instructing the control-signal generating unit 8; and perform link management in a similar manner to that in the third embodiment.

As described above, in the present embodiment, the first filtering unit 1a-1 and the second filtering unit 1a-2 detect a control signal of a high-order layer, and the signal processing unit 31a individually controls stop and start of the first high-speed processing unit 23a-1 and the second high-speed processing unit 23a-2 corresponding to an upstream direction and a downstream direction, respectively. Therefore, low power consumption can be efficiently achieved even in a system that uses a network or a communication system in which it is difficult to stop communications in one of the directions (a network or a communication system in which a communication-maintained state is always necessary in one of upstream and downstream directions). Further, discarding of user data can be also prevented in a similar manner to that in the first and second embodiments.

### INDUSTRIAL APPLICABILITY

As described above, the communication apparatus and the communication system according to the present invention are useful for conducting energy saving in a communication system that performs data communications, and are particularly suitable for a communication system in which shifting from a sleep state to a communication state requires a long time.

## Claims

1. A communication apparatus that comprises a data processing unit that performs predetermined data processing on input data, and operates by switching two states of a sleep state as a state where an operation of the data processing unit is stopped and a normal state as a state where the data processing unit is operating, the communication apparatus comprising:
a filtering unit that extracts communication state information for indicating a communication state from the input data; and
a signal processing unit that shifts the data processing unit to a sleep state or a normal state based on the communication state information.

2. The communication apparatus according to claim 1, further comprising a storage unit that stores the communication state information, wherein
the filtering unit stores extracted communication state information in the storage unit, and
the signal processing unit shifts the data processing unit to a sleep state or a normal state based on communication state information that is stored in the storage unit, and also performs a transferring process of communication state information that is stored in the storage unit.

3. The communication apparatus according to claim 2,
wherein the communication apparatus multiplexes communication state information to which the transferring process is to be performed, with transmission data, and transmits multiplexed information.

4. The communication apparatus according to claim 1, 2, or 3, wherein the communication state information is a control signal based on a protocol that performs a communication control.

5. The communication apparatus according to claim 4, wherein the signal processing unit counts number of arrivals of the control signal per unit time, and shifts the data processing unit to a sleep state or a normal state based on the number of arrivals.

6. A communication system that is configured by a master station apparatus and a plurality of slave station apparatuses, each of the slave station apparatuses including a data processing unit that processes input data, and operates by switching two states of a sleep state as a state where an operation of the data processing unit is stopped and a normal state as a state where the data processing unit is operating, wherein
the master station apparatus includes:
a first filtering unit that extracts communication state information for indicating a communication state from reception data that is sent from the slave station apparatus;
a second filtering unit that extracts communication state information for indicating a communication state from transmission data that is destined to the slave station apparatus;
a master-station-signal processing unit that determines whether to instruct shifting to a sleep state or shifting to a normal state based on the communication state information, for each of slave station apparatuses;
a master-station-control-signal generating unit that generates a control signal for instructing shifting to a sleep state or shifting to a normal state to a slave station apparatus, based on the determination result; and
a multiplexing unit that multiplexes transmission data that is destined to the slave station apparatus with the control signal that is destined to the slave station apparatus, and transmits multiplexed data, and
the slave station apparatus includes:
a slave-station filtering unit that extracts the control signal from reception data that is sent from the master station apparatus; and
a slave-station-signal processing unit that shifts to a sleep state or a normal state based on an extracted control signal.

7. The communication system according to claim 6, wherein
the slave station apparatus further includes a slave-station-control-signal generating unit that generates a control signal that is destined to the master station apparatus, and
when the slave-station-signal processing unit performs shifting to a sleep state or shifting to a normal state, the slave-station-signal processing unit notifies this shifting to the slave-station-control-signal generating unit, and
the slave-station-control-signal generating unit generates a control signal that is destined to the master station apparatus based on a notification from the slave-station-signal processing unit.

8. A slave station apparatus in a communication system that includes a master station apparatus and a plurality of slave station apparatuses that receive downstream data from the master station apparatus and also receive upstream data from an apparatus other than the master station apparatus, the slave station apparatus comprising:
a first filtering unit that extracts first communication state information indicating a communication state from the downstream data;
a second filtering unit that extracts second communication state information indicating a communication state from the upstream data;
a first data processing unit that performs data processing on the downstream data;
a second data processing unit that performs data processing on the upstream data; and
a signal processing unit that individually controls stop and start of an operation of the first data processing unit and stop and start of an operation of the second data processing unit, based on the first communication state information and the second communication state information.

9. The slave station apparatus according to claim 8, further comprising a control-signal generating unit that generates a control signal that is destined to the master station apparatus, wherein
the signal processing unit notifies to the control-signal generating unit a state of an operation of the first data processing unit and a state of an operation of the second data processing unit, and
the control-signal generating unit generates a control signal that is destined to the master station apparatus based on a notification from the signal processing unit.
